# EUROPÄISCHE PATENTANMELDUNG

(11) **EP 4 218 389 A1**
(43) Veröffentlichungstag der Anmeldung: **02.08.2023**
(21) Anmeldenummer: 22154284.8
(22) Anmeldetag: 31.01.2022
(51) Int. Cl.: A01D 34/00

(54) **VERFAHREN ZUM BETREIBEN EINES AUTONOMEN MOBILEN BEARBEITUNGSROBOTERS UND BEARBEITUNGSSYSTEM**

(71) Anmelder: Andreas Stihl AG & Co. KG, 71336 Waiblingen (DE)
(72) Erfinder: JUNG, Stephanie, 791190 Stuttgart (DE)
(74) Vertreter: Patentanwälte Ruff, Wilhelm, Beier, Dauster & Partner mbB

(57) **Zusammenfassung**

Die Erfindung bezieht sich auf ein Verfahren zum Betreiben eines autonomen mobilen Bearbeitungsroboters (1), wobei das Verfahren die Schritte aufweist:
a) Erfassen einer Farbinformation (FI) über eine Farbe (Fa, Fb) eines Objekts (100a, 100b) mittels eines Farb-Messprinzips (FM) und Erfassen einer Chlorophyllinformation (CI) über einen Chlorophyllgehalt (Ca, Cb) des Objekts (100a, 100b) mittels eines Chlorophyll-Messprinzips (CM) unabhängig von dem Farb-Messprinzip (FM),
b) Bestimmen einer Steuerart (STa, STb) aus einer Menge von verschiedenen Steuerarten (STa, STb) des Bearbeitungsroboters (1) basierend auf mindestens der erfassten Farbinformation (FI) und der erfassten Chlorophyllinformation (CI), und
c) Steuern des Bearbeitungsroboters (1) in der bestimmten Steuerart (STa, STb).

## Beschreibung

### ANWENDUNGSGEBIET UND STAND DER TECHNIK

Die Erfindung bezieht sich auf ein Verfahren zum Betreiben eines autonomen mobilen Bearbeitungsroboters und ein Bearbeitungssystem.

### AUFGABE UND LÖSUNG

Der Erfindung liegt als Aufgabe die Bereitstellung eines Verfahrens zum Betreiben eines autonomen mobilen Bearbeitungsroboters und eines Bearbeitungssystems zugrunde, das jeweils verbesserte Eigenschaften aufweist.

Die Erfindung löst diese Aufgabe durch die Bereitstellung eines Verfahrens mit den Merkmalen des Anspruchs 1 und eines Bearbeitungssystems mit den Merkmalen des Anspruchs 13. Vorteilhafte Weiterbildungen und/oder Ausgestaltungen der Erfindung sind in den abhängigen Ansprüchen beschrieben.

Das erfindungsgemäße Verfahren ist zum Betreiben eines autonomen mobilen Bearbeitungsroboters ausgebildet bzw. vorgesehen. Das Verfahren weist die Schritte auf: a) Erfassen einer Farbinformation, insbesondere eines Inhalts der Farbinformation, über eine Farbe, insbesondere einen Wert der Farbe und/oder die Farbe, eines Objekts mittels eines Farb-Messprinzips. Erfassen einer Chlorophyllinformation, insbesondere eines Inhalts der Chlorophyllinformation, über einen Chlorophyllgehalt, insbesondere einen Wert des Chlorophyllgehalts und/oder den Chlorophyllgehalt, des Objekts mittels eines Chlorophyll-Messprinzips unabhängig von dem Farb-Messprinzip. b) Bestimmen einer Steuerart aus einer Menge von verschiedenen Steuerarten des Bearbeitungsroboters, insbesondere in Abhängigkeit von der Erfassung des Objekts, basierend auf mindestens der erfassten Farbinformation und der erfassten Chlorophyllinformation. c) Steuern des Bearbeitungsroboters in der bestimmten Steuerart.

Dies ermöglicht, insbesondere die Farbinformation und die Chlorophyllinformation, ermöglichen ein jeweils einfaches, und insbesondere somit kostengünstiges, Erfassen, insbesondere im Unterscheid zu einem nicht-erfindungsgemäßen komplexen Erfassen, insbesondere entweder der Farbinformation oder der Chlorophyllinformation. Zusätzlich oder alternativ ermöglicht dies, insbesondere die Farbinformation und die Chlorophyllinformation bzw. das Farb-Messprinzip und das Chlorophyll-Messprinzip unabhängig voneinander ermöglichen, ein verbessertes Bestimmen der Steuerart. Weiter zusätzlich oder alternativ ermöglicht dies, insbesondere das Steuern in der bestimmten Steuerart, einen verbesserten Umgang des Bearbeitungsroboters mit dem Objekt.

Insbesondere können/kann das Verfahren, das Betreiben, das Erfassen, das Bestimmen und/oder das Steuern automatisch sein. Zusätzlich oder alternativ kann das Erfassen berührungslos bzw. -frei sein.

Für den Begriff "ausgebildet" kann der Begriff "konfiguriert" synonym verwendet werden. Zusätzlich oder alternativ kann für den Begriff "aufweist" der Begriff "umfasst" oder "hat" synonym verwendet werden.

Der Bearbeitungsroboter kann elektrisch und/oder steuerbar sein. Zusätzlich oder alternativ kann der Bearbeitungsroboter zum autonomen Bearbeiten einer Fläche ausgebildet sein, insbesondere ein Bearbeitungswerkzeug aufweisen. Insbesondere kann autonom Bearbeiten bedeuten, dass sich der Bearbeitungsroboter auf der Fläche selbstständig, selbsttätig, selbstbestimmt, selbstgesteuert und/oder unabhängig von einem, insbesondere menschlichen, Benutzer bewegen und/oder agieren und/oder zumindest einen Parameter, wie insbesondere einen Streckenparameter, und/oder einen Umkehrpunkt auswählen kann. Zusätzlich oder alternativ kann autonom Bearbeiten bedeuten, dass der Bearbeitungsroboter selbstständig mit einem Bearbeiten beginnen und/oder das Bearbeiten beenden kann. Weiter zusätzlich oder alternativ braucht oder kann beim autonomen Bearbeiten der Bearbeitungsroboter nicht durch den Benutzer gesteuert zu sein, insbesondere nicht ferngesteuert. In anderen Worten: bei dem autonomen Bearbeiten kann der Bearbeitungsroboter ohne menschliche Steuerung und/oder Führung arbeiten. Weiter zusätzlich oder alternativ kann der Bearbeitungsroboter als Serviceroboter und/oder Dienstleistungsroboter bezeichnet werden. Weiter zusätzlich oder alternativ kann der Bearbeitungsroboter ein Grünflächenbearbeitungsroboter sein. Weiter zusätzlich oder alternativ kann die Fläche beispielsweise eine Freifläche, insbesondere ein unversiegelter Boden, oder eine Grünfläche sein, wie eine Wiese mit Rasen.

Das Objekt kann potenziell durch den Bearbeitungsroboter berührt werden.

Das Farb-Messprinzip und/oder das Chlorophyll-Messprinzip können/kann berührungslos bzw. - frei sein. Zusätzlich oder alternativ können das Farb-Messprinzip und/oder das Chlorophyll-Messprinzip verschieden sein. Weiter zusätzlich oder alternativ kann für den Begriff "Messprinzip" der Begriff "Wirkprinzip" synonym verwendet werden. Weiter zusätzlich oder alternativ kann für den Begriff "unabhängig" der Begriff "komplementär" synonym verwendet werden.

Die Farbe kann Licht elektromagnetischer Strahlung der Wellenlänge zwischen 380 nm (Nanometer) und 780 nm sein. Zusätzlich oder alternativ kann die Farbe eine Körper- bzw. Gegenstandsfarbe sein. In anderen Worten: Das Objekt kann ein Nichtselbstleuchter sein.

Für den Begriff "Bestimmen" kann der Begriff "Auswählen" synonym verwendet werden. Zusätzlich oder alternativ kann die Menge mindestens zwei Steuerarten aufweisen. Weiter zusätzlich oder alternativ kann die Menge von verschiedenen Steuerarten des Bearbeitungsroboters berücksichtigend und/oder potenziell betreffend das Objekt sein. Weiter zusätzlich oder alternativ kann das Bestimmen mittels Verknüpfens bzw. Fusionierens bzw. Kombinierens mindestens der erfassten Farbinformation und der erfassten Chlorophyllinformation sein.

Für den Wortbestandteil "Steuer" kann der Wortbestandteil "Kontroll", insbesondere "Regel", synonym verwendet werden. Zusätzlich oder alternativ kann der Bearbeitungsroboter zu einem Zeitpunkt in entweder einer Steuerart oder einer anderen bzw. nur einer einzigen Steuerart gesteuert werden.

Der Schritt a) kann, insbesondere mehrfach, wiederholt und/oder kontinuierlich ausgeführt werden.

Der Schritt b) kann zeitlich nach dem Schritt a) ausgeführt und/oder, insbesondere mehrfach, wiederholt und/oder kontinuierlich ausgeführt werden.

Der Schritt c) kann zeitlich nach dem Schritt b) ausgeführt und/oder, insbesondere mehrfach, wiederholt und/oder kontinuierlich ausgeführt werden.

In einer Weiterbildung der Erfindung weist der Schritt a) auf: Erfassen einer Temperaturinformation, insbesondere eines Inhalts der Temperaturinformation, über eine Temperatur, insbesondere einen Wert der Temperatur und/oder der Temperatur, des Objekts mittels eines Temperatur-Messprinzips, insbesondere unabhängig von dem Farb-Messprinzip und/oder dem Chlorophyll-Messprinzip. Der Schritt b) weist auf: Bestimmen der Steuerart basierend auf der erfassten Temperaturinformation. Dies ermöglicht ein einfaches Erfassen. Zusätzlich oder alternativ ermöglicht dies ein weiter verbessertes Bestimmen der Steuerart. Weiter zusätzlich oder alternativ ermöglicht dies einen weiter verbesserten Umgang des Bearbeitungsroboters mit dem Objekt. Insbesondere kann das Erfassen automatisch sein. Zusätzlich oder alternativ kann das Temperatur-Messprinzip berührungslos bzw. -frei sein. Weiter zusätzlich oder alternativ kann das Temperatur-Messprinzip von dem Farb-Messprinzip und/oder dem Chlorophyll-Messprinzip verschieden sein.

In einer Weiterbildung, insbesondere einer Ausgestaltung, der Erfindung liegt dem Farb-Messprinzip ein selektives Erfassen und Bewerten des sichtbaren Spektralbereichs und/oder ein Liefern von Farbwerten und/oder ein Dreibereichs-Prinzip zugrunde, insbesondere mittels eines Farbsensors. Zusätzlich oder alternativ liegt dem Chlorophyll-Messprinzip ein Messen von Chlorophyllfluoreszenz zugrunde, insbesondere mittels eines Chlorophyllfluorometers. Weiter zusätzlich oder alternativ liegt dem Temperatur-Messprinzip ein Messen von Wärmestrahlung, insbesondere im, insbesondere mittleren, Infrarot, zugrunde, insbesondere mittels eines Pyrometers. Insbesondere können/kann der Farbsensor, das Chlorophyllfluorometer und/oder das Pyrometer elektrisch sein. Zusätzlich oder alternativ kann der Farbsensor ein RGB-Sensor sein. Weiter zusätzlich oder alternativ kann das Pyrometer ein Quotientenpyrometer sein. Im Übrigen wird auf die Fachliteratur verwiesen.

In einer Ausgestaltung der Erfindung weist das Messen von Chlorophyllfluoreszenz auf: Senden von, insbesondere modulierter, insbesondere gepulster, elektromagnetischer Strahlung, insbesondere nur, einer, insbesondere einzigen, ersten Wellenlänge, insbesondere 432 nm. Empfangen von, insbesondere modulierter, insbesondere gepulster, elektromagnetischer Strahlung einer gegenüber der ersten größeren zweiten Wellenlänge, insbesondere von 630 nm bis 1100 nm, insbesondere um 700 nm, insbesondere angeregt durch die gesendete Strahlung. Dies ermöglicht ein besonders einfaches Erfassen, insbesondere bei Fremd- und/oder Umgebungs- und/oder Sonnenlicht und/oder von Chlorophyll a. Insbesondere können/kann das Senden und/oder das Empfangen automatisch sein. Zusätzlich oder alternativ kann das Senden, insbesondere mehrfach, wiederholt und/oder kontinuierlich ausgeführt werden. Weiter zusätzlich oder alternativ kann das Empfangen zeitlich nach dem Senden ausgeführt und/oder, insbesondere mehrfach, wiederholt und/oder kontinuierlich ausgeführt werden. Weiter zusätzlich oder alternativ kann elektromagnetische Strahlung eines, insbesondere des, Bereichs der gegenüber der ersten größeren zweiten Wellenlänge, insbesondere von 630 nm bis 1100 nm, insbesondere um 700 nm, empfangen bzw. gemessen werden. In anderen Worten: Es braucht oder kann nicht elektromagnetische Strahlung nur einer einzigen zweiten Wellenlänge empfangen bzw. gemessen werden. Weiter zusätzlich oder alternativ braucht oder kann nicht elektromagnetische Strahlung einer weiteren Wellenlänge gesendet und/oder empfangen werden. Insbesondere kann das Verfahren aufweisend das Erfassen der Chlorophyllinformation mittels des Chlorophyll-Messprinzips zugrunde liegend das Messen von Chlorophyllfluoreszenz aufweisend das Senden von der elektromagnetischen Strahlung nur der einzigen ersten Wellenlänge und/oder das Empfangen von der elektromagnetischen Strahlung des Bereichs der gegenüber der ersten größeren zweiten Wellenlänge, insbesondere mittels eines solchen einfachen Chlorophyllfluorometers, und/oder ohne das Erfassen der Farbinformation und, insbesondere somit, das Bestimmen der Steuerart basierend auf, insbesondere nur, der erfassten Chlorophyllinformation und/oder nicht basierend auf einer Farbinformation eine eigenständige Erfindung darstellen. Weiter zusätzlich oder alternativ kann um 700 nm ± 10 nm bedeuten. Im Übrigen wird auf die Fachliteratur verwiesen.

In einer Weiterbildung, insbesondere einer Ausgestaltung, der Erfindung weist der Schritt b) auf: Bestimmen der Steuerart basierend darauf, ob die erfasste Farbinformation oder eine auf der, insbesondere erfassten, Farbinformation basierende Information ein Farbkriterium erfüllt oder nicht. Das Farbkriterium ist für die Farbe grün charakteristisch, insbesondere ist die Farbe grün. Zusätzlich oder alternativ Bestimmen der Steuerart basierend darauf, ob die erfasste Chlorophyllinformation oder eine auf der, insbesondere erfassten, Chlorophyllinformation basierende Information ein Chlorophyllkriterium erfüllt oder nicht. Das Chlorophyllkriterium ist für einen Chlorophyllmindestgehalt charakteristisch, insbesondere ist der Chlorophyllmindestgehalt. Weiter zusätzlich oder alternativ Bestimmen der Steuerart basierend darauf, ob die erfasste Temperaturinformation oder eine auf der, insbesondere erfassten, Temperaturinformation basierende Information ein Temperaturkriterium erfüllt oder nicht. Das Temperaturkriterium ist für eine Mindesttemperatur, insbesondere 35 °C (Grad Celsius), charakteristisch, insbesondere ist die Mindesttemperatur. Dies ermöglicht ein besonders gutes Bestimmen der Steuerart, insbesondere berücksichtigend das Objekt als Gras und/oder Pflanze, wie z.B. Moos, Sache, wie z.B. ein Stein oder Plastik und/oder Spielzeug, Tier oder Mensch. Insbesondere kann für den Begriff "charakteristisch" der Begriff "kennzeichnend" synonym verwendet werden. Zusätzlich oder alternativ kann ein, insbesondere jeweiliges, Kriterium für einen Mindestwert charakteristisch sein. Insbesondere kann der, insbesondere jeweilige, optimale Mindestwert durch Verfahren des maschinellen Lernens gefunden werden. Im Übrigen wird auf die Fachliteratur verwiesen.

In einer Ausgestaltung der Erfindung weist der Schritt b) aufweist: Bestimmen der Steuerart berücksichtigend das Objekt als Gras und/oder Pflanze bei Erfüllung des Farbkriteriums und bei Erfüllung des Chlorophyllkriteriums, insbesondere in einem Sonne/Schatten-Übergang bei Erfüllung des Temperaturkriteriums. Zusätzlich oder alternativ Bestimmen der Steuerart berücksichtigend das Objekt als grünfarbene Sache oder grünfarbenes Tier oder grünfarbener Mensch bzw. mit grünfarbenem Merkmal bei Erfüllung des Farbkriteriums und bei Nicht-Erfüllung des Chlorophyllkriteriums, insbesondere als Sache bei Nicht-Erfüllung des Temperaturkriteriums oder als Tier oder Mensch bei Erfüllung des Temperaturkriteriums. Weiter zusätzlich oder alternativ Bestimmen der Steuerart berücksichtigend das Objekt als chlorophyllaufweisende Sache oder chlorophyllaufweisendes Tier oder chlorophyllaufweisender Mensch bei Nicht-Erfüllung des Farbkriteriums und bei Erfüllung des Chlorophyllkriteriums, insbesondere als Sache bei Nicht-Erfüllung des Temperaturkriteriums oder als Tier oder Mensch bei Erfüllung des Temperaturkriteriums. Weiter zusätzlich oder alternativ Bestimmen der Steuerart berücksichtigend das Objekt als Sache oder Tier oder Mensch bei Nicht-Erfüllung des Farbkriteriums und bei Nicht-Erfüllung des Chlorophyllkriteriums, insbesondere als Sache bei Nicht-Erfüllung des Temperaturkriteriums oder als Tier oder Mensch bei Erfüllung des Temperaturkriteriums. Dies, insbesondere das Steuern in der bestimmten Steuerart, ermöglicht einen besonders guten Umgang des Bearbeitungsroboters mit dem Objekt. Insbesondere kann für den Begriff "chlorophyllaufweisend" der Begriff "chlorophyllhaltig" synonym verwendet werden.

In einer Weiterbildung, insbesondere einer Ausgestaltung, der Erfindung weist der Schritt b) auf: Bestimmen der Steuerart aus der Menge von verschiedenen Steuerarten aufweisend mindestens eine Bearbeitungs-Steuerart und eine Nicht-Bearbeitungs-Steuerart, insbesondere als die Bearbeitungs-Steuerart bei Erfüllung des Farbkriteriums und bei Erfüllung des Chlorophyllkriteriums und/oder als die Nicht-Bearbeitungs-Steuerart bei Nicht-Erfüllung des Farbkriteriums und/oder bei Nicht-Erfüllung des Chlorophyllkriteriums. Dies ermöglicht einen spezifischen, insbesondere art- bzw. typspezifischen, Umgang mit dem Objekt, insbesondere eine Berührung des Objekts durch den Bearbeitungsroboter freigebend bzw. zulassend, insbesondere in der Bearbeitungs-Steuerart, oder vermeidend bzw. sperrend, insbesondere in der Nicht-Bearbeitungs-Steuerart. Insbesondere können die Bearbeitungs-Steuerart und die Nicht-Bearbeitungs-Steuerart verschieden sein.

In einer Weiterbildung, insbesondere einer Ausgestaltung, der Erfindung weist der Bearbeitungsroboter ein Bewegungs-Antriebssystem, insbesondere ein Fahr-Antriebssystem, zum Bewegen des Bearbeitungsroboters auf einer, insbesondere der, Fläche auf. Der Schritt c) weist auf: Steuern des Bewegungs-Antriebssystems in der bestimmten Steuerart, insbesondere in der Bearbeitungs-Steuerart zum Bewegen des Bearbeitungsroboters zu dem Objekt, insbesondere über das Objekt und/oder in Berührung mit dem Objekt, oder in der Nicht-Bearbeitungs-Steuerart zum Herumbewegen des Bearbeitungsroboters um das Objekt herum. Zusätzlich oder alternativ weist der Bearbeitungsroboter ein bewegliches, insbesondere das, Bearbeitungswerkzeug zum Bearbeiten einer, insbesondere der, Fläche und ein Werkzeug-Antriebssystem zum Bewegen des Bearbeitungswerkzeugs auf. Der Schritt c) weist auf: Steuern des Werkzeug-Antriebssystems in der bestimmten Steuerart, insbesondere in der Bearbeitungs-Steuerart Aktivieren des Werkzeug-Antriebssystems zum Bearbeiten des Objekts oder in der Nicht-Bearbeitungs-Steuerart Deaktivieren des Werkzeug-Antriebssystems zum Nicht-Bearbeiten des Objekts. Insbesondere kann die Fläche durch den Bearbeitungsroboter, insbesondere sein Bearbeitungswerkzeug, zu bearbeiten sein. Zusätzlich oder alternativ kann das Objekt, insbesondere entweder, ein Teil der Fläche oder auf der Fläche sein bzw. liegen. Weiter zusätzlich oder alternativ können/kann das Bewegungs-Antriebssystem und/oder das Werkzeug-Antriebssystem ein Motorantriebssystem, elektrisch und/oder steuerbar sein. Weiter zusätzlich oder alternativ kann für den Begriff "Aktivieren" der Begriff "Einschalten" synonym verwendet werden. Weiter zusätzlich oder alternativ kann für den Begriff "Deaktivieren" der Begriff "Ausschalten" synonym verwendet werden.

In einer Weiterbildung, insbesondere einer Ausgestaltung, der Erfindung weist der Bearbeitungsroboter, insbesondere an seiner Unterseite, ein, insbesondere das, Bearbeitungswerkzeug zum Bearbeiten einer, insbesondere der, Fläche auf. Das Bearbeitungswerkzeug, insbesondere mindestens ein Ende des Bearbeitungswerkzeugs, definiert bzw. weist einen Bearbeitungsbereich auf. Der Schritt a) weist auf: Erfassen der Farbinformation über die Farbe und/oder der Chlorophyllinformation über den Chlorophyllgehalt des Objekts in einem Erfassungsbereich. Der Erfassungsbereich ist bzw. liegt außerhalb des Bearbeitungsbereichs, insbesondere vor dem Bearbeitungsbereich, insbesondere dem Bearbeitungsroboter. Dies ermöglicht, dass das Erfassen und somit das Bestimmen und das Steuern rechtzeitig sein können, insbesondere zeitlich vor einer potenziellen Berührung des Objekts durch den Bearbeitungsroboter. Insbesondere kann die Fläche durch den Bearbeitungsroboter, insbesondere sein Bearbeitungswerkzeug, zu bearbeiten sein. Zusätzlich oder alternativ kann das Objekt, insbesondere entweder, ein Teil der Fläche oder auf der Fläche sein bzw. liegen. Weiter zusätzlich oder alternativ kann die Temperaturinformation über die Temperatur des Objekts in dem Erfassungsbereich erfasst werden. Weiter zusätzlich oder alternativ können der Erfassungsbereich und der Bearbeitungsbereich, insbesondere vollständig, verschieden und/oder räumlich sein, insbesondere auf der Fläche. Weiter zusätzlich oder alternativ kann der Erfassungsbereich mindestens 5 cm (Zentimeter), insbesondere 10 bis 15 cm, vor dem Bearbeitungsbereich, insbesondere dem Bearbeitungsroboter, sein. Weiter zusätzlich oder alternativ kann vor in einer Vorzug- bzw. Hauptbewegungsrichtung des Bearbeitungsroboters sein.

In einer Weiterbildung der Erfindung ist der Bearbeitungsroboter als ein Rasenmähroboter, insbesondere mit einem Rasenmähwerkzeug, ausgebildet. Für einen derartigen Bearbeitungsroboter kann das Verfahren besonders vorteilhaft sein. Insbesondere kann der Bearbeitungsroboter als ein Mulchmähroboter ausgebildet sein. Zusätzlich oder alternativ kann das Rasenmähwerkzeug mindestens einen Mähfaden, mindestens ein Kunststoffmesser, mindestens ein Metallmesser und/oder ein Metallschneideblatt mit mindestens einer Schneidkante und/oder mit mindestens einem Schneidezahn umfassen. Weiter zusätzlich oder alternativ kann das Rasenmähwerkzeug als ein rotierendes Rasenmähwerkzeug und dazu ausgebildet sein, ein zu mähendes Gut im sogenannten Freischnittverfahren ohne Gegenschneide zu mähen.

In einer Weiterbildung, insbesondere einer Ausgestaltung, der Erfindung wird das Erfassen der Farbinformation und/oder der Chlorophyllinformation und/oder der Temperaturinformation mittels des Bearbeitungsroboters ausgeführt, insbesondere nach unten, insbesondere gerichtet. Dies ermöglicht das Erfassen an einer Stelle, wo das Objekt sein kann.

Das erfindungsgemäße Bearbeitungssystem weist eine Erfassungseinrichtung, eine Bestimmungseinrichtung und eine Steuereinrichtung auf. Die Erfassungseinrichtung ist zum, insbesondere zu dem, Erfassen einer, insbesondere der, Farbinformation über eine, insbesondere die, Farbe eines, insbesondere des, Objekts mittels eines, insbesondere des, Farb-Messprinzips und zum, insbesondere zu dem, Erfassen einer, insbesondere der, Chlorophyllinformation über einen, insbesondere den, Chlorophyllgehalt des Objekts mittels eines, insbesondere des, Chlorophyll-Messprinzips unabhängig von dem Farb-Messprinzip ausgebildet. Die Bestimmungseinrichtung ist zum, insbesondere zu dem, Bestimmen einer, insbesondere der, Steuerart aus einer, insbesondere der, Menge von verschiedenen Steuerarten eines, insbesondere des, autonomen mobilen Bearbeitungsroboters basierend auf mindestens der erfassten Farbinformation und der erfassten Chlorophyllinformation ausgebildet. Die Steuereinrichtung ist zum, insbesondere zu dem, Steuern des Bearbeitungsroboters in der bestimmten Steuerart ausgebildet. Das Bearbeitungssystem kann mindestens einen Teil oder sogar alle Vorteile wie vorhergehend für das Verfahren genannt ermöglichen. Insbesondere kann das Bearbeitungssystem zum, insbesondere automatischen, Ausführen eines, insbesondere des, Verfahrens wie vorhergehend genannt ausgebildet sein. Zusätzlich oder alternativ kann das Bearbeitungssystem ein Grünflächenbearbeitungssystem sein. Weiter zusätzlich oder alternativ können/kann das Bearbeitungssystem, die Erfassungseinrichtung, die Bestimmungseinrichtung und/oder die Steuereinrichtung elektrisch sein. Weiter zusätzlich oder alternativ kann für den Begriff "Erfassungseinrichtung" der Begriff "Sensoreinrichtung" synonym verwendet werden. Weiter zusätzlich oder alternativ kann die Erfassungseinrichtung den Erfassungsbereich definieren bzw. aufweisen. Weiter zusätzlich oder alternativ können/kann die Bestimmungseinrichtung und/oder die Steuereinrichtung eine Recheneinrichtung und/oder einen Mikrokontroller und/oder einen Computer aufweisen, insbesondere sein.

In einer Weiterbildung der Erfindung weist das Bearbeitungssystem den Bearbeitungsroboter auf.

In einer Weiterbildung der Erfindung weist der Bearbeitungsroboter die Erfassungseinrichtung und/oder die Bestimmungseinrichtung und/oder die Steuereinrichtung auf.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: schematisch ein erfindungsgemäßes Bearbeitungssystem aufweisend einen autonomen mobilen Bearbeitungsroboter und ein erfindungsgemäßes Verfahren zum Betreiben des autonomen mobilen Bearbeitungsroboters, und insbesondere schematisch ein Diagramm zum Erfassen einer Temperaturinformation über eine Temperatur eines Objekts mittels des Bearbeitungssystems und des Verfahrens,
- Fig. 2: schematisch das Bearbeitungssystem und das Verfahren der Fig. 1,
- Fig. 3: schematisch ein Diagramm von Chlorophyllfluoreszenz eines Objekts zum Erfassen einer Chlorophyllinformation über einen Chlorophyllgehalt des Objekts mittels des Bearbeitungssystems und des Verfahrens der Fig. 1,
- Fig. 4: schematisch ein weiteres Diagramm von Chlorophyllfluoreszenz eines Objekts zum Erfassen einen Chlorophyllinformation einer Chlorophyllinformation über einen Chlorophyllgehalt des Objekts mittels des Bearbeitungssystems und des Verfahrens der Fig. 1,
- Fig. 5: schematisch ein Diagramm zum Erfassen einer Farbinformation über eine Farbe eines Objekts mittels des Bearbeitungssystems und des Verfahrens der Fig. 1, und
- Fig. 6: schematisch einen Bestimmungsbaum des Bearbeitungssystems und des Verfahrens der Fig. 1.

### DETAILLIERTE BESCHREIBUNG DER AUSFÜHRUNGSBEISPIELE

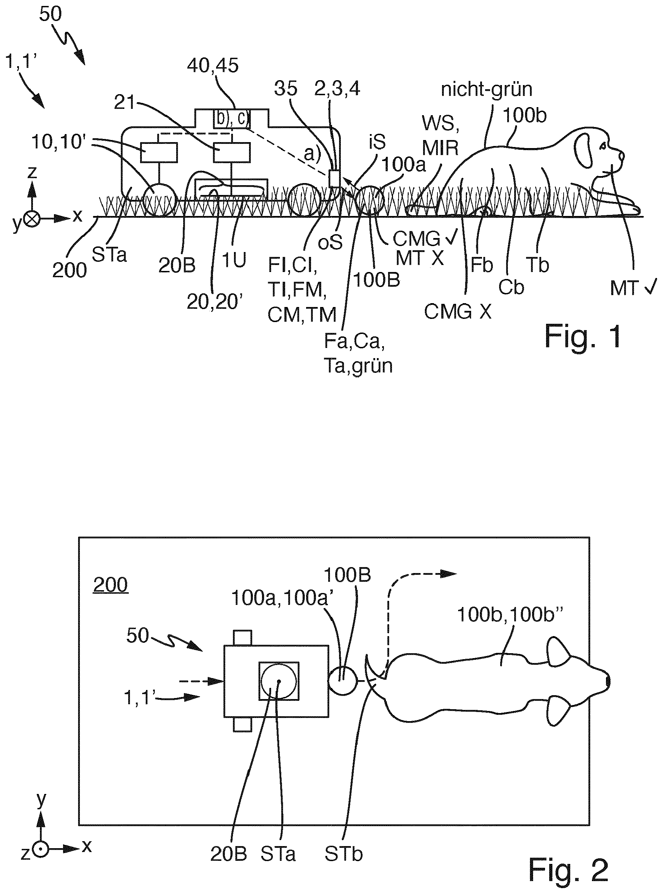

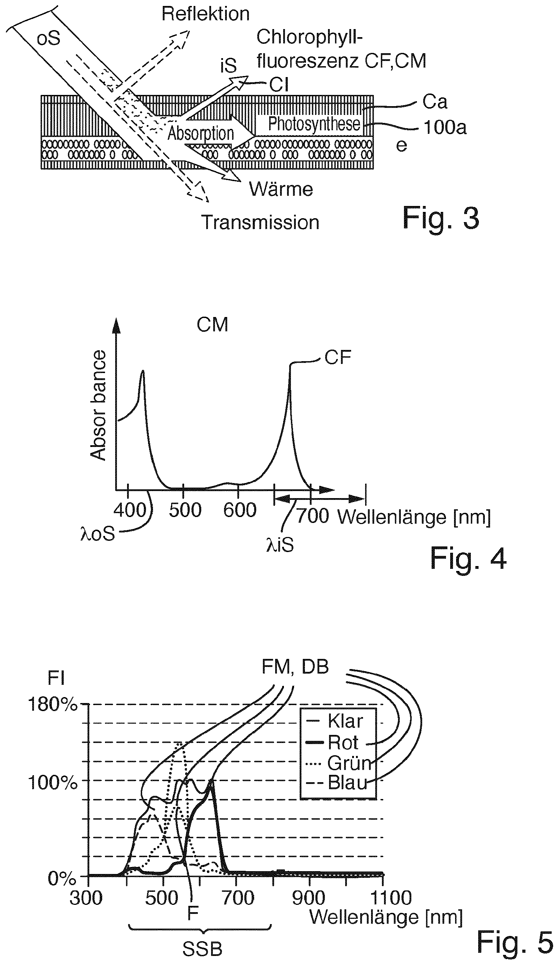

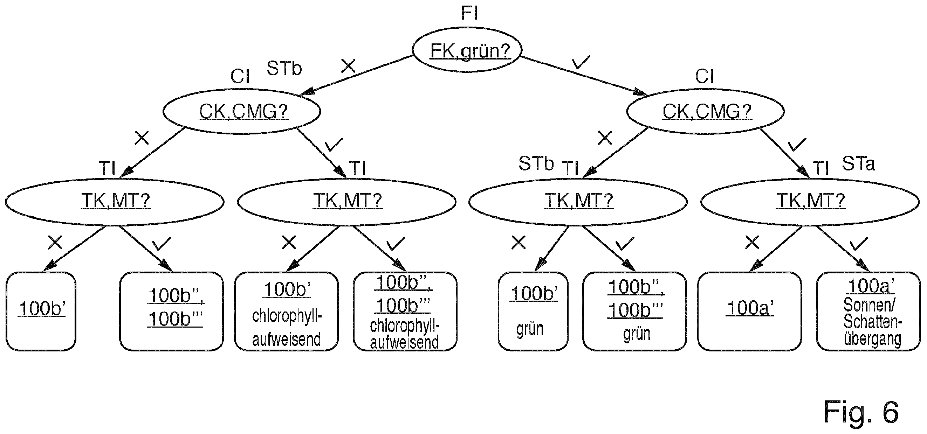

Fig. 1 und 2 zeigen ein erfindungsgemäßes Bearbeitungssystem 50. Das Bearbeitungssystem 50 weist eine Erfassungseinrichtung 35, eine Bestimmungseinrichtung 40 und eine Steuereinrichtung 45 auf. Die Erfassungseinrichtung 35 ist zum Erfassen einer Farbinformation FI über eine Farbe Fa, Fb eines Objekts 100a, 100b mittels eines Farb-Messprinzips FM, wie in Fig. 5 gezeigt, und zum Erfassen einer Chlorophyllinformation Cl über einen Chlorophyllgehalt Ca, Cb des Objekts 100a, 100b mittels eines Chlorophyll-Messprinzips CM, wie in Fig. 3 und 4 gezeigt, unabhängig von dem Farb-Messprinzip FM ausgebildet, insbesondere erfasst. Die Bestimmungseinrichtung 40 ist zum Bestimmen einer Steuerart STa, STb aus einer Menge von verschiedenen Steuerarten STa, STb eines autonomen mobilen Bearbeitungsroboters 1 basierend auf mindestens der erfassten Farbinformation FI und der erfassten Chlorophyllinformation Cl ausgebildet, insbesondere bestimmt, wie in Fig. 6 gezeigt. Die Steuereinrichtung 45 ist zum Steuern des Bearbeitungsroboters 1 in der bestimmten Steuerart STa, STb ausgebildet, insbesondere steuert.

Im Detail weist das Bearbeitungssystem 50 den Bearbeitungsroboter 1 auf.

Des Weiteren weist der Bearbeitungsroboter 1 die Erfassungseinrichtung 35 und/oder die Bestimmungseinrichtung 40 und/oder die Steuereinrichtung 45 auf.

Fig. 1 bis 6 zeigen ein erfindungsgemäßes Verfahren zum Betreiben des autonomen mobilen Bearbeitungsroboters 1, insbesondere mittels des Bearbeitungssystems 50. Das Verfahren weist die Schritte auf: a) Erfassen der Farbinformation FI über die Farbe Fa, Fb des Objekts 100a, 100b mittels des Farb-Messprinzips FM, insbesondere mittels der Erfassungseinrichtung 35. Erfassen der Chlorophyllinformation Cl über den Chlorophyllgehalt Ca, Cb des Objekts 100a, 100b mittels des Chlorophyll-Messprinzips CM unabhängig von dem Farb-Messprinzip FM, insbesondere mittels der Erfassungseinrichtung 35. b) Bestimmen der Steuerart STa, STb aus der Menge von verschiedenen Steuerarten STa, STb des Bearbeitungsroboters 1 basierend auf mindestens der erfassten Farbinformation FI und der erfassten Chlorophyllinformation Cl, insbesondere mittels der Bestimmungseinrichtung 40. c) Steuern des Bearbeitungsroboters 1 in der bestimmten Steuerart STa, STb, insbesondere mittels der Steuereinrichtung 45.

Außerdem weist der Schritt a) auf: Erfassen einer Temperaturinformation Tl über eine Temperatur Ta, Tb des Objekts 100a, 100b mittels eines Temperatur-Messprinzips TM, wie in Fig. 1 gezeigt, insbesondere unabhängig von dem Farb-Messprinzip FM und/oder dem Chlorophyll-Messprinzip CM, insbesondere mittels der Erfassungseinrichtung 35. Der Schritt b) weist auf: Bestimmen der Steuerart STa, STb basierend auf der erfassten Temperaturinformation TI, insbesondere mittels der Bestimmungseinrichtung 40.

Weiter wird das Erfassen der Farbinformation FI und/oder der Chlorophyllinformation Cl und/oder der Temperaturinformation Tl mittels des Bearbeitungsroboters 1 ausgeführt.

Im Detail liegt dem Farb-Messprinzip FM ein selektives Erfassen und Bewerten des sichtbaren Spektralbereichs SSB und/oder ein Liefern von Farbwerten und/oder ein Dreibereichs-Prinzip DB zugrunde, wie in Fig. 5 gezeigt, insbesondere mittels eines Farbsensors 2, wie in Fig. 1 gezeigt. Zusätzlich oder alternativ liegt dem Chlorophyll-Messprinzip CM ein Messen von Chlorophyllfluoreszenz CF zugrunde, wie in Fig. 3 und 4 gezeigt, insbesondere mittels eines Chlorophyllfluorometers 3, wie in Fig. 1 gezeigt. Weiter zusätzlich oder alternativ liegt dem Temperatur-Messprinzip TM ein Messen von Wärmestrahlung WS, insbesondere im, insbesondere mittleren, Infrarot MIR, zugrunde, insbesondere mittels eines Pyrometers 4, wie in Fig. 1 gezeigt.

In dem gezeigten Ausführungsbeispiel weist die Erfassungseinrichtung 35 den Farbsensor 2 und/oder das Chlorophyllfluorometer 3 und/oder das Pyrometer 4 auf.

Zudem ist der Farbsensor 2 ein RGB-Sensor bzw. weist 3 Farbkanäle auf, wie in Fig. 5 gezeigt. Insbesondere gibt ein Messen der Farbkanäle mit weißem Untergrund eine Nulllinie. Des Weiteren werden die 3 Farbkanäle kombiniert zur Bestimmung bzw. Entscheidung, ob die erfasste Farbe grün ist, insbesondere bei einer signifikanten Erhöhung des grünen Farbkanals bzw. Spektrums im Vergleich zu den anderen Farbkanälen bzw. Spektren.

Im Detail weist das Messen von Chlorophyllfluoreszenz CF auf: Senden von, insbesondere modulierter, insbesondere gepulster, elektromagnetischer Strahlung oS, insbesondere nur, einer, insbesondere einzigen, ersten Wellenlänge λoS, insbesondere 432 nm, wie in Fig. 1, 3 und 4 gezeigt, insbesondere mittels des Chlorophyllfluorometers 3. Empfangen von, insbesondere modulierter, insbesondere gepulster, elektromagnetischer Strahlung iS einer gegenüber der ersten größeren zweiten Wellenlänge λiS, insbesondere von 630 nm bis 1100 nm, insbesondere um 700 nm, insbesondere mittels des Chlorophyllfluorometers 3.

Insbesondere regt die gesendete Strahlung oS Chlorophyll a an, soweit vorhanden. Das angeregte Chlorophyll a sendet die empfange Strahlung iS, insbesondere zurück zu dem Chlorophyllfluorometer 3.

Außerdem weist das Chlorophyllfluorometer 3 mindestens eine Sendeeinrichtung, wie z.B. eine Photodiode, zu dem Senden der Strahlung oS und/oder mindestens eine Empfangseinrichtung, wie z.B. einen Phototransistor, zu dem Empfangen der Strahlung iS auf.

Weiter weist der Schritt b) auf: Bestimmen der Steuerart STa, STb basierend darauf, ob die erfasste Farbinformation FI oder eine auf der Farbinformation basierende Information ein Farbkriterium FK erfüllt oder nicht, wie in Fig. 6 gezeigt. Das Farbkriterium FK ist für die Farbe grün charakteristisch. Zusätzlich oder alternativ Bestimmen der Steuerart STa, STb basierend darauf, ob die erfasste Chlorophyllinformation Cl oder eine auf der Chlorophyllinformation basierende Information ein Chlorophyllkriterium CK erfüllt oder nicht. Das Chlorophyllkriterium CK ist für einen Chlorophyllmindestgehalt CMG charakteristisch. Weiter zusätzlich oder alternativ Bestimmen der Steuerart STa, STb basierend darauf, ob die erfasste Temperaturinformation Tl oder eine auf der Temperaturinformation basierende Information ein Temperaturkriterium TK erfüllt oder nicht. Das Temperaturkriterium TK ist für eine Mindesttemperatur MT, insbesondere 35 °C, charakteristisch.

Im Detail weist der Schritt b) aufweist: Bestimmen der Steuerart STa berücksichtigend das Objekt 100a als Gras 100a' und/oder Pflanze bei Erfüllung des Farbkriteriums FK und bei Erfüllung des Chlorophyllkriteriums CK, insbesondere in einem Sonne/Schatten-Übergang bei Erfüllung des Temperaturkriteriums TK. Zusätzlich oder alternativ Bestimmen der Steuerart STb berücksichtigend das Objekt 100b als grünfarbene Sache 100b' oder grünfarbenes Tier 100b" oder grünfarbener Mensch 100b‴ bei Erfüllung des Farbkriteriums FK und bei Nicht-Erfüllung des Chlorophyllkriteriums CK, insbesondere als Sache 100b' bei Nicht-Erfüllung des Temperaturkriteriums TK oder als Tier 100b" oder Mensch 100b‴ bei Erfüllung des Temperaturkriteriums TK. Weiter zusätzlich oder alternativ Bestimmen der Steuerart STb berücksichtigend das Objekt 100b als chlorophyllaufweisende Sache 100b' oder chlorophyllaufweisendes Tier 100b" oder chlorophyllaufweisender Mensch 100b‴ bei Nicht-Erfüllung des Farbkriteriums FK und bei Erfüllung des Chlorophyllkriteriums CK, insbesondere als Sache 100b' bei Nicht-Erfüllung des Temperaturkriteriums TK oder als Tier 100b" oder Mensch 100b‴ bei Erfüllung des Temperaturkriteriums TK. Weiter zusätzlich oder alternativ Bestimmen der Steuerart STb berücksichtigend das Objekt 100b als Sache 100b' oder Tier 100b" oder Mensch 100b‴ bei Nicht-Erfüllung des Farbkriteriums FK und bei Nicht-Erfüllung des Chlorophyllkriteriums CK, insbesondere als Sache 100b' bei Nicht-Erfüllung des Temperaturkriteriums TK oder als Tier 100b" oder Mensch 100b‴ bei Erfüllung des Temperaturkriteriums TK.

In dem gezeigten Ausführungsbeispiel ist das Objekt 100a Gras 100a' und/oder das Objekt 100b ist ein Tier 100b", wie z.B. ein Hund, wie in Fig. 1 und 2 gezeigt.

Zudem ist das Objekt 100a ein Teil einer Fläche 200. Zusätzlich oder alternativ ist das Objekt 100b auf der Fläche 200.

Des Weiteren weist der Schritt b) auf: Bestimmen der Steuerart STa, STb aus der Menge von verschiedenen Steuerarten STa, STb aufweisend mindestens eine Bearbeitungs-Steuerart STa und eine Nicht-Bearbeitungs-Steuerart STb, insbesondere als die Bearbeitungs-Steuerart STa bei Erfüllung des Farbkriteriums FK und bei Erfüllung des Chlorophyllkriteriums CK und/oder als die Nicht-Bearbeitungs-Steuerart STb bei Nicht-Erfüllung des Farbkriteriums FK und/oder bei Nicht-Erfüllung des Chlorophyllkriteriums CK, wie in Fig. 6 gezeigt.

Außerdem weist der Bearbeitungsroboter 1 ein Bewegungs-Antriebssystem 10, insbesondere ein Fahr-Antriebssystem 10', zum Bewegen des Bearbeitungsroboters 1 auf der Fläche 200 auf, wie in Fig. 1 gezeigt. Der Schritt c) weist auf: Steuern des Bewegungs-Antriebssystems 10 in der bestimmten Steuerart STa, STb, insbesondere in der Bearbeitungs-Steuerart STa zum Bewegen des Bearbeitungsroboters 1 zu dem Objekt 100a oder in der Nicht-Bearbeitungs-Steuerart STb zum Herumbewegen des Bearbeitungsroboters 1 um das Objekt 100b herum, wie in Fig. 2 gezeigt. Zusätzlich oder alternativ weist der Bearbeitungsroboter 1 ein bewegliches Bearbeitungswerkzeug 20 zum Bearbeiten der Fläche 200 und ein Werkzeug-Antriebssystem 21 zum Bewegen des Bearbeitungswerkzeugs 20 auf, wie in Fig. 1 gezeigt. Der Schritt c) weist auf: Steuern des Werkzeug-Antriebssystems 21 in der bestimmten Steuerart STa, STb, insbesondere in der Bearbeitungs-Steuerart STa Aktivieren des Werkzeug-Antriebssystems 21 zum Bearbeiten des Objekts 100a oder in der Nicht-Bearbeitungs-Steuerart STb Deaktivieren des Werkzeug-Antriebssystems 21 zum Nicht-Bearbeiten des Objekts 100b.

Weiter weist der Bearbeitungsroboter 1, insbesondere an seiner Unterseite 1U, das Bearbeitungswerkzeug 20 zum Bearbeiten der Fläche 200 auf. Das Bearbeitungswerkzeug 20 definiert einen Bearbeitungsbereich 20B. Der Schritt a) weist auf: Erfassen der Farbinformation FI über die Farbe Fa, Fb und/oder der Chlorophyllinformation Cl über den Chlorophyllgehalt Ca, Cb, und insbesondere der Temperaturinformation TI über die Temperatur Ta, Tb, des Objekts 100a, 100b in einem Erfassungsbereich 100B. Der Erfassungsbereich 100B ist außerhalb des Bearbeitungsbereichs 20B, insbesondere vor dem Bearbeitungsbereich 20B, insbesondere dem Bearbeitungsroboter 1.

Zudem ist der Bearbeitungsroboter 1 als ein Rasenmähroboter 1', insbesondere mit einem Rasenmähwerkzeug 20', ausgebildet, insbesondere mäht.

In dem gezeigten Ausführungsbeispiel ist das Bearbeitungswerkzeug 20 das Rasenmähwerkzeug 20'.

Des Weiteren werden zeitlich erstens die Farbinformation FI über die Farbe Fa und die Chlorophyllinformation Cl über den Chlorophyllgehalt Ca des Objekts 100a erfasst, und insbesondere nicht die Farbinformation FI über die Farbe Fb und die Chlorophyllinformation Cl über den Chlorophyllgehalt Cb des Objekts 100b, wie in Fig. 1 und 2 gezeigt. Das Objekt 100a ist das Gras 100a'. Somit erfüllt die erfasste Farbinformation FI das Farbkriterium FK und die erfasste Chlorophyllinformation Cl erfüllt das Chlorophyllkriterium CK. Somit wird die Steuerart STa, insbesondere die Bearbeitungs-Steuerart STa, bestimmt und der Bearbeitungsroboter 1 wird in der bestimmten Steuerart STa, insbesondere der Bearbeitungs-Steuerart STa, gesteuert.

Zeitlich zweitens bzw. danach werden die Farbinformation FI über die Farbe Fb und die Chlorophyllinformation Cl über den Chlorophyllgehalt Cb des Objekts 100b erfasst, und insbesondere nicht die Farbinformation FI über die Farbe Fa und die Chlorophyllinformation Cl über den Chlorophyllgehalt Ca des Objekts 100a. Das Objekt 100b ist das Tier 100b". Somit erfüllt die erfasste Farbinformation FI nicht das Farbkriterium FK und/oder die erfasste Chlorophyllinformation Cl erfüllt nicht das Chlorophyllkriterium CK. Somit wird die Steuerart STb, insbesondere die Nicht-Bearbeitungs-Steuerart STb, bestimmt und der Bearbeitungsroboter 1 wird in der bestimmten Steuerart STb, insbesondere der Nicht-Bearbeitungs-Steuerart STb, gesteuert.

Wie die gezeigten und oben erläuterten Ausführungsbeispiele deutlich machen, stellt die Erfindung ein vorteilhaftes Verfahren zum Betreiben eines autonomen mobilen Bearbeitungsroboters und ein vorteilhaftes Bearbeitungssystem bereit, das jeweils verbesserte Eigenschaften aufweist.

## Patentansprüche

1. Verfahren zum Betreiben eines autonomen mobilen Bearbeitungsroboters (1), wobei das Verfahren die Schritte aufweist:
a) Erfassen einer Farbinformation (FI) über eine Farbe (Fa, Fb) eines Objekts (100a, 100b) mittels eines Farb-Messprinzips (FM) und Erfassen einer Chlorophyllinformation (Cl) über einen Chlorophyllgehalt (Ca, Cb) des Objekts (100a, 100b) mittels eines Chlorophyll-Messprinzips (CM) unabhängig von dem Farb-Messprinzip (FM),
b) Bestimmen einer Steuerart (STa, STb) aus einer Menge von verschiedenen Steuerarten (STa, STb) des Bearbeitungsroboters (1) basierend auf mindestens der erfassten Farbinformation (FI) und der erfassten Chlorophyllinformation (Cl), und
c) Steuern des Bearbeitungsroboters (1) in der bestimmten Steuerart (STa, STb).

2. Verfahren nach dem vorhergehenden Anspruch,
- wobei der Schritt a) aufweist: Erfassen einer Temperaturinformation (TI) über eine Temperatur (Ta, Tb) des Objekts (100a, 100b) mittels eines Temperatur-Messprinzips (TM), insbesondere unabhängig von dem Farb-Messprinzip (FM) und/oder dem Chlorophyll-Messprinzip (CM), und
- wobei der Schritt b) aufweist: Bestimmen der Steuerart (STa, STb) basierend auf der erfassten Temperaturinformation (TI),
- insbesondere wobei dem Temperatur-Messprinzip (TM) ein Messen von Wärmestrahlung (WS), insbesondere im, insbesondere mittleren, Infrarot (MIR), zugrunde liegt, insbesondere mittels eines Pyrometers (4).

3. Verfahren nach einem der vorhergehenden Ansprüche,
- wobei dem Farb-Messprinzip (FM) ein selektives Erfassen und Bewerten des sichtbaren Spektralbereichs (SSB) und/oder ein Liefern von Farbwerten und/oder ein Dreibereichs-Prinzip (DB) zugrunde liegt, insbesondere mittels eines Farbsensors (2).

4. Verfahren nach einem der vorhergehenden Ansprüche,
- wobei dem Chlorophyll-Messprinzip (CM) ein Messen von Chlorophyllfluoreszenz (CF) zugrunde liegt, insbesondere mittels eines Chlorophyllfluorometers (3).

5. Verfahren nach dem vorhergehenden Anspruch,
- wobei das Messen von Chlorophyllfluoreszenz (CF) aufweist:
- Senden von, insbesondere modulierter, insbesondere gepulster, elektromagnetischer Strahlung (oS), insbesondere nur, einer, insbesondere einzigen, ersten Wellenlänge (λoS), insbesondere 432 nm, und
- Empfangen von, insbesondere modulierter, insbesondere gepulster, elektromagnetischer Strahlung (iS) einer gegenüber der ersten größeren zweiten Wellenlänge (λiS), insbesondere von 630 nm bis 1100 nm, insbesondere um 700 nm.

6. Verfahren nach einem der vorhergehenden Ansprüche, insbesondere Anspruch 2,
- wobei der Schritt b) aufweist: Bestimmen der Steuerart (STa, STb) basierend darauf,
- ob die erfasste Farbinformation (FI) oder eine auf der Farbinformation basierende Information ein Farbkriterium (FK) erfüllt oder nicht, wobei das Farbkriterium (FK) für die Farbe grün (grün) charakteristisch ist, und/oder
- ob die erfasste Chlorophyllinformation (Cl) oder eine auf der Chlorophyllinformation basierende Information ein Chlorophyllkriterium (CK) erfüllt oder nicht, wobei das Chlorophyllkriterium (CK) für einen Chlorophyllmindestgehalt (CMG) charakteristisch ist, und/oder
- ob die erfasste Temperaturinformation (TI) oder eine auf der Temperaturinformation basierende Information ein Temperaturkriterium (TK) erfüllt oder nicht, wobei das Temperaturkriterium (TK) für eine Mindesttemperatur (MT), insbesondere 35 °C, charakteristisch ist.

7. Verfahren nach dem vorhergehenden Anspruch, und insbesondere Anspruch 2,
- wobei der Schritt b) aufweist: Bestimmen der Steuerart (STa, STb) berücksichtigend das Objekt (100a, 100b) als
- Gras (100a') und/oder Pflanze bei Erfüllung des Farbkriteriums (FK) und bei Erfüllung des Chlorophyllkriteriums (CK), insbesondere in einem Sonne/Schatten-Übergang bei Erfüllung des Temperaturkriteriums (TK), und/oder
- grünfarbene Sache (100b') oder grünfarbenes Tier (100b") oder grünfarbener Mensch (100b‴) bei Erfüllung des Farbkriteriums (FK) und bei Nicht-Erfüllung des Chlorophyllkriteriums (CK), insbesondere als Sache (100b') bei Nicht-Erfüllung des Temperaturkriteriums (TK) oder als Tier (100b") oder Mensch (100b‴) bei Erfüllung des Temperaturkriteriums (TK), und/oder
- chlorophyllaufweisende Sache (100b') oder chlorophyllaufweisendes Tier (100b") oder chlorophyllaufweisender Mensch (100b‴) bei Nicht-Erfüllung des Farbkriteriums (FK) und bei Erfüllung des Chlorophyllkriteriums (CK), insbesondere als Sache (100b') bei Nicht-Erfüllung des Temperaturkriteriums (TK) oder als Tier (100b") oder Mensch (100b‴) bei Erfüllung des Temperaturkriteriums (TK), und/oder
- Sache (100b') oder Tier (100b") oder Mensch (100b‴) bei Nicht-Erfüllung des Farbkriteriums (FK) und bei Nicht-Erfüllung des Chlorophyllkriteriums (CK), insbesondere als Sache (100b') bei Nicht-Erfüllung des Temperaturkriteriums (TK) oder als Tier (100b") oder Mensch (100b‴) bei Erfüllung des Temperaturkriteriums (TK).

8. Verfahren nach einem der vorhergehenden Ansprüche, insbesondere Anspruch 6,
- wobei der Schritt b) aufweist: Bestimmen der Steuerart (STa, STb) aus der Menge von verschiedenen Steuerarten (STa, STb) aufweisend mindestens eine Bearbeitungs-Steuerart (STa) und eine Nicht-Bearbeitungs-Steuerart (STb),
- insbesondere als die Bearbeitungs-Steuerart (STa) bei Erfüllung des Farbkriteriums (FK) und bei Erfüllung des Chlorophyllkriteriums (CK) und/oder als die Nicht-Bearbeitungs-Steuerart (STb) bei Nicht-Erfüllung des Farbkriteriums (FK) und/oder bei Nicht-Erfüllung des Chlorophyllkriteriums (CK).

9. Verfahren nach einem der vorhergehenden Ansprüche, insbesondere Anspruch 8,
- wobei der Bearbeitungsroboter (1) ein Bewegungs-Antriebssystem (10), insbesondere ein Fahr-Antriebssystem (10'), zum Bewegen des Bearbeitungsroboters (1) auf einer Fläche (200) aufweist, und wobei der Schritt c) aufweist: Steuern des Bewegungs-Antriebssystems (10) in der bestimmten Steuerart (STa, STb), insbesondere in der Bearbeitungs-Steuerart (STa) zum Bewegen des Bearbeitungsroboters (1) zu dem Objekt (100a) oder in der Nicht-Bearbeitungs-Steuerart (STb) zum Herumbewegen des Bearbeitungsroboters (1) um das Objekt (100b) herum, und/oder
- wobei der Bearbeitungsroboter (1) ein bewegliches Bearbeitungswerkzeug (20) zum Bearbeiten einer Fläche (200) und ein Werkzeug-Antriebssystem (21) zum Bewegen des Bearbeitungswerkzeugs (20) aufweist, und wobei der Schritt c) aufweist: Steuern des Werkzeug-Antriebssystems (21) in der bestimmten Steuerart (STa, STb), insbesondere in der Bearbeitungs-Steuerart (STa) Aktivieren des Werkzeug-Antriebssystems (21) zum Bearbeiten des Objekts (100a) oder in der Nicht-Bearbeitungs-Steuerart (STb) Deaktivieren des Werkzeug-Antriebssystems (21) zum Nicht-Bearbeiten des Objekts (100b).

10. Verfahren nach einem der vorhergehenden Ansprüche, insbesondere Anspruch 9,
- wobei der Bearbeitungsroboter (1), insbesondere an seiner Unterseite (1U), ein Bearbeitungswerkzeug (20) zum Bearbeiten einer Fläche (200) aufweist, wobei das Bearbeitungswerkzeug (20) einen Bearbeitungsbereich (20B) definiert, und
- wobei der Schritt a) aufweist: Erfassen der Farbinformation (FI) über die Farbe (Fa, Fb) und/oder der Chlorophyllinformation (Cl) über den Chlorophyllgehalt (Ca, Cb) des Objekts (100a, 100b) in einem Erfassungsbereich (100B), wobei der Erfassungsbereich (100B) außerhalb des Bearbeitungsbereichs (20B), insbesondere vor dem Bearbeitungsbereich (20B), insbesondere dem Bearbeitungsroboter (1), ist.

11. Verfahren nach einem der vorhergehenden Ansprüche,
- wobei der Bearbeitungsroboter (1) als ein Rasenmähroboter (1'), insbesondere mit einem Rasenmähwerkzeug (20'), ausgebildet ist.

12. Verfahren nach einem der vorhergehenden Ansprüche, insbesondere Anspruch 2,
- wobei das Erfassen der Farbinformation (FI) und/oder der Chlorophyllinformation (Cl) und/oder der Temperaturinformation (TI) mittels des Bearbeitungsroboters (1) ausgeführt wird.

13. Bearbeitungssystem (50), insbesondere zum Ausführen eines Verfahrens nach einem der vorhergehenden Ansprüche, wobei das Bearbeitungssystem (50) aufweist:
- eine Erfassungseinrichtung (35), wobei die Erfassungseinrichtung (35) zum Erfassen einer Farbinformation (FI) über eine Farbe (Fa, Fb) eines Objekts (100a, 100b) mittels eines Farb-Messprinzips (FM) und zum Erfassen einer Chlorophyllinformation (Cl) über einen Chlorophyllgehalt (Ca, Cb) des Objekts (100a ,100b) mittels eines Chlorophyll-Messprinzips (CM) unabhängig von dem Farb-Messprinzip (FM) ausgebildet ist,
- eine Bestimmungseinrichtung (40), wobei die Bestimmungseinrichtung (40) zum Bestimmen einer Steuerart (STa, STb) aus einer Menge von verschiedenen Steuerarten (STa, STb) eines autonomen mobilen Bearbeitungsroboters (1) basierend auf mindestens der erfassten Farbinformation (FI) und der erfassten Chlorophyllinformation (Cl) ausgebildet ist, und
- eine Steuereinrichtung (45), wobei die Steuereinrichtung (45) zum Steuern des Bearbeitungsroboters (1) in der bestimmten Steuerart (STa, STb) ausgebildet ist.

14. Bearbeitungssystem (50) nach dem vorhergehenden Anspruch,
- wobei das Bearbeitungssystem (50) den Bearbeitungsroboter (1) aufweist.

15. Bearbeitungssystem (50) nach dem vorhergehenden Anspruch,
- wobei der Bearbeitungsroboter (1) die Erfassungseinrichtung (35) und/oder die Bestimmungseinrichtung (40) und/oder die Steuereinrichtung (45) aufweist.
